# EUROPÄISCHE PATENTSCHRIFT

(11) **EP 0 734 322 B1**
(45) Veröffentlichungstag und Bekanntmachung des Hinweises auf die Patenterteilung: **30.09.1998**
(21) Anmeldenummer: 95936510.7
(22) Anmeldetag: 17.10.1995
(51) Int. Cl.: B32B 27/36, C08J 5/18

(54) **MEHRSCHICHTIGER DATENTRÄGER MIT DECKSCHICHTEN AUS MODIFIZIERTEM PET**
MULTILAYERED DATA CARRIER WITH COATING LAYERS OF MODIFIED PET
SUPPORT D'INFORMATION MULTICOUCHE A COUCHES DE REVETEMENT EN POLYETHYLENE-TEREPHTALATE (PET) MODIFIE

(30) Priorität: 18.10.1994 DE 4437263; 01.03.1995 DE 19507144
(43) Veröffentlichungstag der Anmeldung: 02.10.1996
(73) Patentinhaber: Giesecke & Devrient GmbH, 81677 München (DE)
(72) Erfinder: RIEDL, Josef, D-85395 Attenkirchen (DE)
(74) Vertreter: Klunker . Schmitt-Nilson . Hirsch
(86) Internationale Anmeldenummer: EP9504071
(87) Internationale Veröffentlichungsnummer: WO9611805

(56) Entgegenhaltungen:
- EP-A- 0 385 611
- GB-A- 1 465 973
- US-A- 4 522 670
- DATABASE WPI Section Ch, Week 9425 Derwent Publications Ltd., London, GB; Class A32, AN 94-205789 & JP,A,06 143 435 ( TOYO INK MFG CO) , 24.Mai 1994
- Kunststoff Lexikon, 7. Auflage, Seiten 280, 281

## Beschreibung

Die Erfindung betrifft einen ein- oder mehrschichtigen Datenträger, wie z.B. Ausweiskarte, Bankkarte oder ähnliches, der wenigstens eine Kunststoffschicht aufweist.

Datenträger, wie Ausweiskarten, Kreditkarten, Bankkarten, Paßpersonalisierungsseiten, Telefonkarten u. ä. haben im täglichen Leben hohe Bedeutung erlangt und sind weiterhin von zunehmender Wichtigkeit. Ihre Verbreitung und die Zahl der im Umlauf befindlichen Karten ist in den letzten Jahren sprunghaft angestiegen. Hochwertige Karten, die beispielsweise im Sicherheitsbereich oder in Bereichen eingesetzt werden, in denen erhöhte mechanische Belastbarkeit gefordert ist, werden zumeist aus mehreren Schichten hergestellt. Dabei wird bevorzugt eine ein- oder beidseitig bedruckte Kernschicht von zwei transparenten Deckschichten abgedeckt.

Bei der Auswahl der verwendeten Kartenmaterialien hat sich insbesondere PVC bewährt. So ist aus der DE 30 48 736 A1 beispielsweise eine einschichtige Ausweiskarte aus PVC bekannt, die mit Titan-Dioxid weiß eingefärbt wurde. Aber auch bei Karten, die aus mehreren Schichten bestehen, wird bevorzugt PVC verwendet. Denn dieses Material läßt sich zu Folien verarbeiten, die dann als Ausgangsstoff für die einzelnen Schichten erhebliche Vorteile gegenüber anderen Folienmaterialien bieten. So lassen sich die einzelnen Schichten laminieren, d. h. unter Druck und Wärme miteinander verbinden. Zusatzstoffe, welche bestimmte Eigenschaften der PVC-Folie beeinflussen oder bestimmen, lassen sich sehr gut in das Material einbringen. So können beispielsweise transparente Schichten ebenso hergestellt werden wie opake. Weiterhin läßt sich dieser Kunststoff mit Pigmenten und anderen üblichen Zusatzstoffen mischen, so daß sich die Materialeigenschaften in weiten Bereichen einstellen lassen, wobei etwa die Farbe, das Strahlungs-Absorptionsverhalten u. ä. eingestellt werden kann.

Es wurden auch schon mehrschichtige Ausweiskarten aus PVC vorgeschlagen, die beispielsweise aus einem bedruckten opaken Kartenkern sowie zwei transparenten Deckfolien bestehen (DE 30 29 939 A1). Da alle Schichten aus dem gleichen Kunststoffmaterial bestehen, können sie auf einfache Weise zu einem Kartenlaminat verbunden werden.

PVC an sich hat im Licht der Umweltverträglichkeit jedoch den entscheidenden Nachteil, daß es sich kaum recyclen läßt. Die Entsorgung des Kunststoffes bereitet zudem erhebliche Schwierigkeiten, da bei der Verbrennung und Endlagerung von PVC Salzsäure entsteht. Darüber hinaus wird PVC bei niedrigen Temperaturen leicht spröde, so daß die Karte leicht brechen kann.

Um einerseits die mechanischen Eigenschaften und die Temperaturstabilität von PVC-Karten zu verbessern und andererseits die Menge des eingesetzten PVCs zu reduzieren, wurde bereits vorgeschlagen, hochwertige Karten aus mehreren Schichten unterschiedlicher Materialien herzustellen.

So ist aus der EP 430 282 A2 eine Karte bekannt, bei der jeweils die PVC-Deckschichten und die PVC-Kernschicht der Karte durch eine Schicht aus thermoplastischen Polyurethan (TPU) getrennt sind, so daß die mechanischen Eigenschaften verbessert werden. Die PVC-Schichten lassen sich in solchen Karten auch durch andere Kunststoffe, wie Polyethylen oder Polycarbonat ersetzen, ohne daß die mechanischen Eigenschaften der Karte negativ beeinflußt würden.

Aus der EP 0 385 611 A2 ist ein textiles Produkt bekannt, das für Identifikationszwecke verwendet werden kann. Beim Aufbringen von Textilien, wie Geweben, Stoffen und ähnlichem auf Unterlagen wird eine Diffusion von Farbstoffen vom Gewebe zur Unterlage oder von der Unterlage zum Gewebe dadurch verhindert, dass auf die Stoffrückseite eine Schicht aus glycolmodifiziertem Polyethylenterephthalat aufgebracht wird.

Weiterhin ist aus der JP-A-6143435 ein mehrschichtiger Datenträger bekannt, der zwei Schichten aus Polyethylenterephthalat aufweist.

Nachteilig an derartigen Mehrschichtkarten ist jedoch, dass sich die unterschiedlichen Kunststoffe im Kartenverbund großtechnisch für Recycling-Prozesse kaum mehr trennen lassen. Am Ende der Lebensdauer der Karte kann im Recycling-Prozeß nur das zerkleinerte Kartenlaminat, d. h. eine Mischung der verwendeten Kunststoffe weiterverarbeitet werden, so daß der Kartenverbund lediglich zu minderwertigen Kunststoffartikeln verarbeitet werden kann, an die keine hohen Anforderungen im Hinblick auf Farbe und mechanische Eigenschaften gestellt werden.

Die Aufgabe der Erfindung besteht nun darin, einen Datenträger und ein Verfahren zu seiner Herstellung vorzuschlagen, der bei günstigen mechanischen, optischen und thermischen Eigenschaften gut recyclebar und umweltverträglich entsorgbar ist.

Diese Aufgabe wird durch die im Hauptanspruch angegebenen Merkmale gelöst.

Der Grundgedanke der Erfindung besteht darin, statt des bisher für Datenträger verwendeten PVCs ein thermisch nicht rekristallisierendes Polyester einzusetzen. Dieses Material zeichnet sich dadurch aus, daß es einerseits bei thermischen Verarbeitungsprozessen seine Transparenz nicht verliert und andererseits durch Zugabe von Farbstoffen oder Pigmenten leicht eingefärbt werden kann. Ein- oder mehrschichtige Datenträger aus thermisch nicht rekristallisierendem Polyester gewährleisten daher das gewohnte äußere Erscheinungsbild des Datenträgers und zusätzlich dessen umweltschonende Endlagerung oder Recyclebarkeit. Darüber hinaus weisen die erfindungsgemäßen Datenträger gegenüber den herkömmlichen, PVC enthaltenden Datenträgern verbesserte mechanische Eigenschaften auf.

Ein weiterer Vorteil der erfindungsgemäßen Lösung besteht in der Einsparung von Energie, welche durch eine niedrigere Verarbeitungstemperatur erreicht werden kann.

Hierdurch lassen sich außerdem die Herstellungszykluszeiten verringern.

Sofern bei der Herstellung des Datenträgers ein Prozeß angewendet werden soll, bei dem die thermisch nicht rekristallisierenden Polyester einem thermischen Form- oder Preßprozeß unterworfen werden, wie beispielsweise dem Spritzgießen oder Laminieren, können die thermisch nicht rekristallisierenden Polyester an den beheizten Form- oder Preßplatten haften bleiben, so daß keine glatten Oberflächen hergestellt werden können bzw. der thermische Formprozeß völlig fehlschlägt.

Um dies zu verhindern, können die beheizten Form- oder Preßteile mit Antihaftmitteln versehen werden. Diese Vorgehensweise birgt bei der Herstellung von Datenträgern jedoch den Nachteil in sich, daß die Form- oder Preßplatten ständig gereinigt und die Beschichtung erneuert werden muß. Darüber hinaus lagert sich ein Teil des Antihaftmittels in hoher Konzentration auf der Oberfläche des Datenträgers ab, so daß an der Oberfläche des Datenträgers eine zusätzliche, unerwünschte Schicht entsteht, die ein Bedrucken, Lackieren sowie das Aufbringen von zusätzlichen Elementen beeinträchtigt.

In einer Weiterbildung der Erfindung wird daher zumindest der für die Deckschichten des Datenträgers verwendete, thermisch nicht rekristallisierende Polyester mit einem Zusatz, einem sogenannten Anti-Blockmittel, versehen, so daß die Haftung des thermisch nicht rekristallisierenden Polyesters an den Guß-, Spritzguß- oder Laminierformen verhindert wird.

Für die Herstellung kartenförmiger Datenträger eignet sich aus der Gruppe der thermisch nicht rekristallisierenden Polyester insbesondere chemisch modifiziertes Polyethylenterephthalat (PET), dessen Struktur beispielsweise mit Glykol und Cyclohexan-Dimethanol (CHDM) so modifiziert wird, daß eine thermische Kristallisation des PET ausgeschlossen ist. Derartige Materialien lassen sich beispielsweise dadurch herstellen, daß während der Synthese des PET Glykol und CHDM zugesetzt werden, die in die Hauptkette des PET eingebaut werden, wobei thermisch nicht rekristallisierendes PETG entsteht.

In einer ersten Ausführungsform besteht der erfindungsgemäße Datenträger aus drei thermisch nicht rekristallisierenden, mit Glykol und CHDM modifizierten PETG-Folien. Das für die Kernschicht verwendete PETG wird dabei zusätzlich durch Zugabe von Pigmenten so modifiziert, daß die daraus hergestellte Folie opak ist und den gewünschten Grundfarbton aufweist. Hierbei läßt sich beispielsweise TiO₂ verwenden, das zu einer weißen Färbung der Kernschicht führt. Diese Kernschicht kann ein- oder beidseitig bedruckt werden. Ober- und Unterseite der Kernschicht werden mit je einer transparenten PETG-Folie abgedeckt, in welche jeweils geringe Anteile eines Anti-Blockmittels eingemischt sind. Die Schichten werden bei einer Temperatur von 100° C laminiert. Dadurch verbinden sich die transparenten Deckschichten fest mit der Kernschicht, wobei das in den Deckschichten enthaltene Anti-Blockmittel eine Haftung der Karte an den Laminierplatten verhindert. Es entsteht eine von außen durch zwei transparente Deckschichten geschützte Karte. Sofern in eine oder beide Deckschichten im nachhinein mit Hilfe eines Laserstrahls Daten eingebracht werden sollen, muß die zu beschriftende PETG-Folie zusätzlich mit einem lasersensibilisierenden Stoff, versehen werden. Als besonders vorteilhaft hat sich dabei herausgestellt, die transparente Deckfolie mit Ruß zu versehen. Die Konzentration des sensibilisierenden Stoffes ist dabei so zu wählen, daß einerseits eine einwandfreie Beschriftung erzeugt werden kann, jedoch andererseits keine Beeinträchtigung der Transparenz der Folie eintritt.

Weitere Vorteile und vorteilhafte Weiterbildungen werden anhand der nachstehenden Figuren erläutert, bei denen zugunsten der Anschaulichkeit auf eine maßgetreue Wiedergabe verzichtet wurde. Im einzelnen zeigen die Figuren schematisch:
- Fig. 1: eine erfindungsgemäße Ausweiskarte;
- Fig. 2: den Querschnitt der Ausweiskarte entlang der Schnittlinie AB;
- Fig. 3: den Querschnitt durch einen modifizierten erfindungsgemäßen Datenträger;
- Fig. 4: das Prinzip der Coextrusion einer Folienbahn in Seitenansicht;
- Fig. 5: den Querschnitt durch einen weiteren modifizierten erfindungsgemäßen Datenträger.

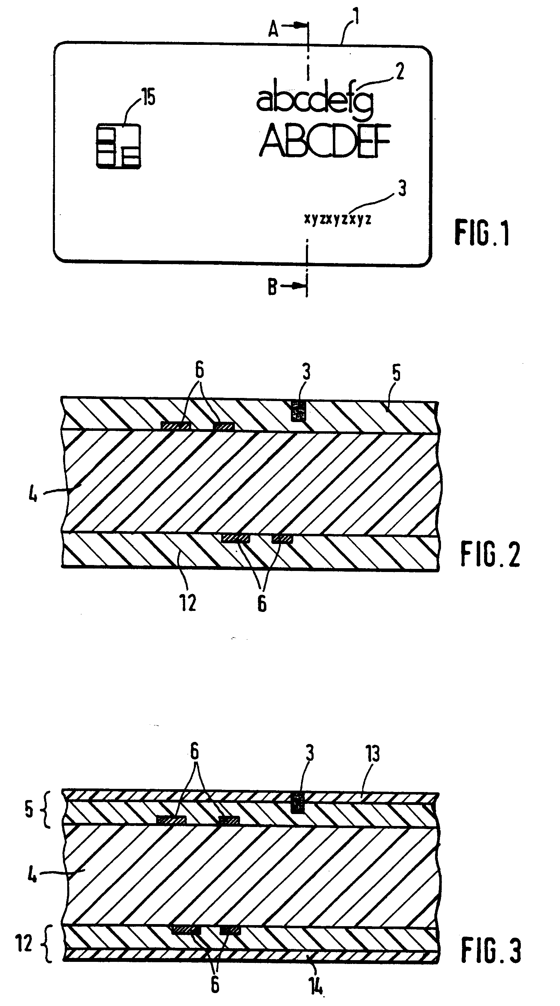

Fig. 1 zeigt einen erfindungsgemäßen Datenträger in Form einer Karte mit einem von der Vorder- und/oder Rückseite der Karte sichtbaren Aufdruck 2 sowie mit Daten 3, die mit einem Laser eingebracht wurden. Der Datenträger kann optional mit einem integrierten Schaltkreis 15 ausgestattet sein sowie weitere Elemente, wie etwa einen Unterschriftsstreifen, einen Magnetstreifen oder optische Datenaufzeichnungsbereiche, aufweisen.

Fig. 2 zeigt den Querschnitt durch eine erste Ausführungsform der Karte entlang der Schnittlinie A-B. Die Karte besteht aus einem opaken Kartenkern 4 sowie zwei, den Kartenkern jeweils abdeckenden transparenten Deckschichten 5 und 12. Die Kernschicht 4 trägt Druckbilddaten 6, die auf der Vorder- und/oder Rückseite der Kernschicht vorliegen.

Nach der Fertigstellung der Karte werden zusätzlich Laserdaten 3 in die Deckschicht 5 eingebracht. Die Kernschicht 4 sowie die Deckschichten 5 und 12 der Karte bestehen aus modifiziertem, thermisch nicht rekristallisierendem Polyester, beispielsweise einem thermisch nicht rekristallisierenden Polyethylenterephthalat (PETG), bei dessen Herstellung die Hauptkette mit Glykol und CHDM modifiziert wurde. Derartige spezielle Polyester zeichnen sich dadurch aus, daß sie nach einer Erwärmung über den Schmelzpunkt und einem darauffolgenden Abkühlvorgang unabhängig von der Abkühlgeschwindigkeit keine Kristallite ausbilden und somit transparent bleiben.

Es versteht sich von selbst, daß auch andere Ausführungen, wie eine ganz oder teilweise transparente Kernschicht, transluzente Deckschichten sowie lediglich in Teilbereichen opake Deckschichten, zur Herstellung der erfindungsgemäßen Karte verwendet werden können. Ebenso kann der Kartenkern lediglich einseitig bedruckt sein. Die Laserdaten können in eine oder beide Deckschichten oder bei entsprechender Sensibilisierung auch in die Kernschicht eingebracht werden.

Bereits während der Herstellung der Kern- und Deckfolien werden die erforderlichen Zusatzstoffe, wie Pigmente, Strahlungsabsorptionsstoffe u. ä., zugegeben, die der fertigen Karte das gewünschte äußere Grunderscheinungsbild sowie ihre Grundeigenschaften verleihen.

Zur Herstellung der Karte werden zunächst die Folien mit den jeweils erforderlichen Eigenschaften produziert. Die Dicke der Folien wird dabei so gewählt, daß die Gesamtdicke des Kartenlaminats die gewünschte Schichtdicke der Karte erreicht. Für Karten wird die Kernschichtfolie bevorzugt in einer Dicke von 200 bis 650 µm und die Deckschichtfolie in einer Dicke von 50 bis 300 µm hergestellt. Um die Haftung der Deckfolien an der Kernschicht zu verbessern, können die Deckfolien unmittelbar nach deren Herstellung gewalzt werden, wobei die Oberfläche durch Aufrauhen vergrößert wird. Die Kernschichtfolie wird anschließend endlos, in Bogenform oder in Form von Einzelkarten bedruckt. Die Kernschichtfolie wird nach dem Bedrucken beidseitig mit transparenten PETG-Folien abgedeckt, denen Anti-Blockmittel zugesetzt sind. Für die Anti-Blockmittel kommen insbesondere Kohlenwasserstoffe wie Paraffine oder Polyethylenwachs, Fettalkohole, wie beispielsweise Stearylalkohol, höhere Carbonsäuren oder Metallsalze, wie Montansäure, Calciumstearat, Zinkstearat, Calciummontanat oder Montanwachse wie Montansäureesterwachs oder teilverseiftes Montansäureesterwachs in Frage.

Bei der Menge der zugegebenen Anti-Blockmittel ist darauf zu achten, daß soviel Anti-Blockmittel zugegeben wird, daß einerseits eine hinreichende Ablösbarkeit von den Laminierplatten gewährleistet ist und andererseits die Verbindung der Schichten untereinander beim Laminieren nicht durch die Menge der Anti-Blockmittel verhindert wird. Für ein Kartenlaminat aus PETG hat es sich als günstig erwiesen, je nach eingesetztem Anti-Blockmittel einen Anteil von 0,1 bis 3% bezogen auf das Gewicht des Polymeres einzusetzen. Als besonders vorteilhaft hat es sich herausgestellt, die Menge des Anti-Blockmittels zwischen 0,5 und 2 Gew.% zu wählen.

Den für die Deckschicht verwendeten PETG-Folien können weitere Zusätze zugegeben werden, die beispielsweise eine Beschriftung mit einem Laserstrahl ermöglichen. Hierbei können insbesondere Ruß, Graphit oder andere, die Energie des jeweils verwendeten Laserstrahls absorbierende Stoffe eingesetzt werden. Bei der Menge aller zugegebenen Stoffe ist jedoch darauf zu achten, daß die gewünschte Transparenzeigenschaft der PETG-Deckfolie nicht negativ beeinflußt wird, um die Erkennbarkeit des auf der Kernschicht befindlichen Drucks zu gewährleisten. Die Verwendung transluzenter oder nur in Teilbereichen opaker Deckschichten eröffnet hierbei allerdings interessante gestalterische Möglichkeiten. Es ist darüber hinaus auch möglich, eine der Deckschichten opak ausgestalten, wobei hier bevorzugt die rückwärtige Kartenschicht in Frage kommt.

Darüber hinaus ist es auch möglich, die Eigenschaften der PETG-Karte im Hinblick auf das Auf- oder Einbringen von Daten mit Hilfe eines Lasers durch weitere Zusatzstoffe zu verbessern. Hierbei kommen insbesondere schnell und sensibel carbonisierende Kunststoffe, also im wesentlichen Polycarbonat, in Betracht. Diese Kunststoffe werden vor dem Einmischen compoundiert, d.h. es wird ein Masterbatch auf Basis des thermisch nicht rekristallisierenden Polyesters in entsprechender Konzentration mit den Zusatzstoffen hergestellt, und dem PETG zugegeben. Mit Hilfe dieser Zusatzstoffe kann die Erzeugung von Halbtonbildern, also insbesondere die Erzeugung von Fotos oder anderen Graustufenbildern erheblich verbessert werden. Je nach Anwendungsfall steht es dem Fachmann dabei offen, auch eine Kombination aus verschiedenen lasersensiblen Zusatzstoffen zu verwenden um die für den jeweiligen Anwendungsfall optimalen Bedingungen zu schaffen.

Durch die Zugabe weiterer Zusätze lassen sich die Eigenschaften der PETG-Karte weiterhin positiv beeinflussen. So kann die Temperaturstabilität der Karte durch die Zugabe von Stoffen verbessert werden, die aus der Gruppe der Polyester stammenden Polyethylennaphtalate ausgewählt werden. Grundsätzlich läßt sich über die Konzentration der beigemischten Zusatzstoffe jede beliebige Temparaturstabilität bis etwa 100 °C einstellen. Dabei werden Konzentrationen gewählt, die in einem Bereich von 5 bis 45 %, insbesondere von 10 bis 25 % liegen. Die Zugabe derartiger Zusatzstoffe bewirkt dabei gleichzeitig eine Verbesserung der Schlagzähigkeit, was sich insbesondere beim Hochprägen der Karte positiv auswirkt.

In Fig. 3 ist ein weiterer möglicher Schichtaufbau der Karte im Querschnitt gezeigt. Die ein- oder beidseitig bedruckte Kartenkernschicht 4 ist wiederum aus einer opaken PETG-Folie hergestellt und wird beidseitig von transparenten PETG-Schichten 5 und 12 abgedeckt. Zur Gewährleistung einer guten Ablösbarkeit von den Laminierplatten werden die Schichten 5 und 12 so hergestellt, daß lediglich die unmittelbar unter der äußeren Oberfläche der Schichten 5 und 12 liegenden Volumenbereiche 13 und 14 mit Anti-Blockmitteln angereichert sind. Diese Ausführungsform hat den Vorteil, daß wesentlich weniger Anti-Blockmittel in das PETG eingemischt werden muß und dennoch das Ablösen der Karte von den Laminierplatten gewährleistet wird.

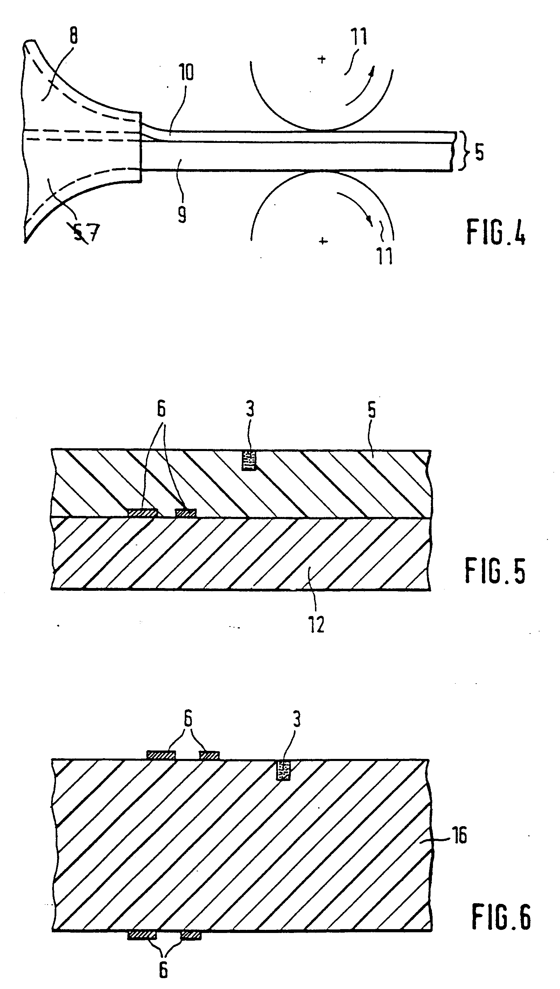

Wie in Fig. 4 in Seitenansicht schematisch gezeigt, kann zur Herstellung der in Fig. 3 beschriebenen Deckschicht 5 und 12 beispielsweise eine PETG-Folie ohne Anti-Blockmittel 9 zusammen mit einer PETG-Folie mit Anti-Blockmitteln 10 aus zwei verschiedenen Düsen 7, 8 eines Extruders coextrudiert werden. Die Schichtdicken dieser beiden Folien lassen sich jeweils separat einstellen, wobei die gewünschte Gesamtschichtdicke einer Deckfolie 5, 12 von etwa 50 bis 200 µm eingestellt werden kann. Der Schichtstärkenanteil der PETG-Folie mit Anti-Blockmittel zur Schichtstärke des PETG ohne Anti-Blockmittel liegt dabei bevorzugt zwischen 1:1 und 1:5, d.h. die Schichtdicke der PETG-Folie mit Anti-Blockmittel bewegt sich vorzugsweise im Bereich von 10 bis 100 µm.

Aus einer Extruderdüse 7 wird hierzu das PETG ohne Anti-Blockmittel extrudiert und darüberliegend aus einer Extruderdüse 8 eine dünne Schicht PETG mit Anti-Blockmittel. Die PETG-Bahn ohne Anti-Blockmittel 9 läuft dann mit einer auf ihr aufgebrachten PETG-Bahn mit Anti-Blockmittel 10 auf ein Walzenpaar 11 zu, welches die beiden Folien so miteinander verbindet, so daß die Deckfolie 5, 12 entsteht, die in ihrem Oberflächenbereich mit Anti-Blockmitteln angereichert ist.

Zur Erzeugung der in ihrem Oberflächenbereich mit Anti-Blockmitteln angereicherten PETG-Bahn besteht jedoch auch die Möglichkeit, eine PETG-Bahn ohne Anti-Blockmittel mit einer PETG-Bahn mit Anti-Blockmitteln zu beschichten. Dies ist insbesondere dann von großem Vorteil wenn die Beschichtungsstärke zwischen 1 und 20 µm liegen soll. Aus den beiden geschilderten Verfahren zur Herstellung der Deckfolien wird jeweils dasjenige ausgewählt, mit welchem die gewünschten Dicken von PETG mit Anti-Blockmittel am besten erzielt werden können.

Fig. 5 zeigt einen Querschnitt durch eine weitere Ausführungsform des erfindungsgemäßen Datenträgers. Der Datenträger besteht in diesem Fall lediglich aus zwei Deckfolien, die aus PETG hergestellt und zumindest in Teilbereichen ihres Volumens mit einem Anti-Blockmittel versehen wurden. Diese Folien werden miteinander laminiert und weisen bevorzugt gleiche Dicke auf. Zum Einbringen von Druckbilddaten wird die innere Oberfläche der unteren Folie 12 vor dem Laminieren mit einem Druckbild 6 versehen. Die Schicht 12 selbst ist opak. Das Druckbild kann dann durch die transparente zweite Schicht 5 hindurch betrachtet werden. Nach Fertigstellung des Datenträgers lassen sich darüber hinaus Laserdaten 3 in die Schicht 5 einschreiben.

Besonders interessante Varianten lassen sich herstellen, wenn auch die Schicht 12 nicht opak, sondern zumindest in Teilbereichen transparent ist. In diesem Fall entsteht ein an den nicht bedruckten Stellen vollständig transparenter Datenträger, der sogenannte Durchsichtsfenster in nahezu beliebiger geometrischer Form aufweist. Selbstverständlich lassen sich die Druckbilddaten auch auf die innere Oberfläche der Schicht 5 vor dem Laminieren auftragen. Darüber hinaus können die Laserdaten 3 sowohl zusätzlich wie auch ausschließlich in der Schicht 12 eingebracht werden, wenn auch diese Schicht für die Laserstrahlung sensibilisiert ist. In einer weiteren Ausführungsform ist es möglich, der Schicht 5 und/oder 12 lediglich soviel Farbstoffe oder Pigmente zuzugeben, daß die Schichten transluzent sind, d.h. also, daß die Druckbilddaten durch die Schicht 12 hindurch zwar erkennbar, jedoch mit der Farbe der Schicht 5 überlagert werden. Sofern für die Schichten 12 und 5 unterschiedliche Farbtöne gewählt werden, und die Karte von beiden Seiten transluzent ist, läßt sich das Druckbild von der Vorder- und Rückseite betrachten, wobei das Druckbild dann jeweils von unterschiedlichen Farbtönen überlagert ist.

Anhand des folgenden Beispiels soll eine Ausführungsform des erfindungsgemäßen Datenträgers sowie das Verfahren zu seiner Herstellung exemplarisch erläutert werden:

Es wird eine opak weiße Kernschichtfolie aus PETG hergestellt, wobei zu je 90 Teilen PETG 10 Teile TiO₂ zugemischt und homogen in der Schmelze verteilt werden. Anschließend wird eine 630 µm starke Folie zur Verwendung als Kernschichtfolie gezogen. Zur Herstellung der Deckfolien werden 98,5 Teile transparente PETG mit 1,5 Teilen Amidwachs vermischt und eine Deckfolie in einer Stärke von 100 µm hergestellt. Die Kernschicht wird bedruckt und anschließend bei 100° C mit den transparenten Deckschichten laminiert, so daß eine Karte mit einer Gesamtdicke von 830 µm entsteht.

Für sicherheitstechnisch weniger relevante Anwendungen kann der erfindungsgemäße Datenträger auch einschichtig, d.h. lediglich aus einer einzigen Schicht eines thermisch nicht rekristallisierenden Polyesters hergestellt werden. In Fig. 6 ist schematisch der Querschnitt durch eine derartige Karte gezeigt. Die Karte besteht beispielsweise vollständig aus einer PETG-Schicht 16, die bevorzugt opak ist. Auch bei dieser Ausführungsform lassen sich Druckbilddaten 6 auf der Kartenoberfläche aufdrucken. Sofern der thermisch nicht rekristallisierende Polyester mit einem lasersensibilisierenden Stoff versehen wurde, können darüber hinaus auch Laserdaten 3 in das Innere der Karte eingebracht werden, die jedoch zumindest dann in den unbedruckten Teilen der Karte liegen müssen, wenn die Druckfarbe des Aufdrucks 6 für die Laserstrahlung nicht transparent ist. Eine derartige Karte läßt sich beispielsweise dadurch herstellen, daß bereits die Folie aus dem thermisch nicht rekristallisierenden Polyester in der gewünschten Kartenschichtdicke, Farbe und mit den übrigen gewünschten Eigenschaften hergestellt wird. Die Folie kann anschließend in Bögen oder Einzelkarten ausgestanzt und die Stanzelemente anschließend bedruckt werden.

Eine weitere Möglichkeit, derartige einschichtige Karten herzustellen, besteht darin, das bevorzugt opake, thermisch nicht rekristallisierende Polyester im bereits bekannten Spritzgußverfahren in die Form des Datenträgers, insbesondere die einer Karte zu bringen. Dabei wird das thermisch nicht rekristallisierende Polyester aufgeschmolzen und in die Spritzgußform gepreßt, so daß der Kartenkörper entsteht. Dieser läßt sich, wie bereits beschrieben, mit Druckbilddaten 6 und gegebenenfalls Laserdaten 3 versehen.

Selbstverständlich können auch die übrigen bekannten Spritzgußtechniken zur Herstellung einer Karte aus thermisch nicht rekristallisierenden Polyester angewandt werden, wobei insbesondere an das Umspritzen oder Ausspritzen von Papier- oder Kunststoffblättern gedacht ist, bei denen ein in der Spritzgußform eingesetztes Papier-oder Kunststoffblatt ein- oder beidseitig mit dem transparenten, thermisch nicht rekristallisierenden Polyester versehen wird.

Unabhängig von den geschilderten Herstellungsverfahren können die Karten nach den üblichen Verfahren weiterverarbeitet werden. Dabei läßt sich in den bekannten Techniken ein Unterschriftsstreifen aufbringen, ein IC-Baustein einsetzen und/oder die Karte prägen.

## Patentansprüche

1. Ein- oder mehrschichtiger Datenträger, wie z.B. Ausweiskarte, Bankkarte oder ähnliches, der wenigstens eine Kunststoffschicht aufweist, dadurch **gekennzeichnet,** daß die Kunststoffschicht aus einem thermisch nicht rekristallisierendem Polyester, insbesondere einem nicht rekristallisierendem Polyethylenterephthalat besteht und die Schicht zumindest in Teilbereichen ihres Volumens ein Anti-Blockmittel enthält.

2. Datenträger nach Anspruch 1, dadurch gekennzeichnet, daß das thermisch nicht rekristallisierende Polyester ein mit Glykol und Cyclohexan-Dimethanol modifiziertes Polyethylenterephthalat ist.

3. Datenträger nach Anspruch 1 oder 2, dadurch **gekennzeichnet,** daß der Datenträger zwei thermisch nicht rekristallisierende Polyesterschichten aufweist, wobei wenigstens eine der beiden Schichten zumindest in Teilbereichen lichtdurchlässig ist.

4. Datenträger nach einem der Ansprüche 1 bis 3, dadurch **gekennzeichnet,** daß das Anti-Blockmittel in einer Konzentration von 0,1 bis 3 Gew.%, bevorzugt 0,5 bis 2 Gew.%, vorhanden ist.

5. Datenträger nach einem der Ansprüche 1 bis 4, dadurch **gekennzeichnet,** daß sich der Teilbereich in dem sich das Anti-Blockmittel befindet, von der äußeren Oberfläche bis höchstens zur Mitte der äußeren Schicht (5, 12) erstreckt.

6. Datenträger nach einem der Ansprüche 1 bis 5, dadurch **gekennzeichnet,** daß das Anti-Blockmittel aus der Gruppe der Paraffine, Polyethylenwachse, Stearylalkohole, Montansäuren, Calciumstearat, Zinkstearat, Calciummontanat, Montansäureesterwachs oder teilverseiftem Montansäureesterwachs ausgewählt wird.

7. Datenträger nach einem der Ansprüche 1 bis 6, dadurch **gekennzeichnet,** daß wenigstens eine der chemisch modifizierten Schichten transparent, transluzent oder teilweise opak ist.

8. Datenträger nach einem der Ansprüche 1 bis 7, dadurch **gekennzeichnet,** daß mindestens eine der Schichten auf seiner Innenseite bedruckt ist.

9. Datenträger nach einem der Ansprüche 1 bis 8, dadurch **gekennzeichnet,** daß zwischen den beiden Schichten wenigstens eine weitere Schicht angeordnet ist, die opak ist.

10. Datenträger nach Anspruch 9, dadurch **gekennzeichnet,** daß die weitere Schicht aus Papier oder Kunststoff besteht und die Schicht bedruckt ist.

11. Datenträger nach einem der Ansprüche 9 oder 10, dadurch **gekennzeichnet,** daß die Dicke der weiteren Schicht 200 bis 650 µm und die Dicke der äußeren Schicht 50 bis 300 µm beträgt.

12. Datenträger nach einem der Ansprüche 9 bis 11, dadurch **gekennzeichnet,** daß alle Schichten des Datenträgers aus einem chemisch modifizierten, thermisch nicht rekristallisierenden Polyester bestehen.

13. Datenträger nach einem der Ansprüche 1 bis 11, dadurch **gekennzeichnet,** daß wenigstens eine der Schichten einen strahlungsabsorbierenden Zusatzstoff enthält.

14. Datenträger nach Anspruch 1 oder 2, dadurch **gekennzeichnet,** daß der Datenträger lediglich aus einer Schicht aus thermisch nicht rekristallisierendem Polyester aufgebaut ist.

15. Datenträger nach einem der Ansprüche 14, dadurch **gekennzeichnet,** daß der Datenträger zumindest in einem Teilbereich seines Volumens ein Anti-Blockmittel enthält.

16. Datenträger nach Anspruch 14 oder 15, dadurch **gekennzeichnet,** daß dem Datenträger ein strahlungsabsorbierender Zusatzstoff beigemischt wurde.

17. Datenträger nach Anspruch 16, dadurch **gekennzeichnet,** daß dem Datenträger ein schnell und sensibel carbonisierender Kunststoff, insbesondere Polycarbonat, beigemischt ist.

18. Datenträger nach einem der vorhergehenden Ansprüche, dadurch **gekennzeichnet,** daß eine der Kunststoffschichten einen Zusatzstoff enthält, der aus der Gruppe der Polyester stammenden Polyethylennaphtalate gewählt ist.

19. Verfahren zur Herstellung eines ein- oder mehrschichtigen Datenträgers nach Anspruch 1, dadurch **gekennzeichnet,** daß einem thermisch nicht rekristallisierendem Polyester ein Anti-Blockmittel zugegeben wird, diese Mischung aufgeschmolzen und die entstehende Schmelze unter Anwendung der Spritzgußtechnik in Kartenform gebracht wird.

20. Verfahren nach Anspruch 19, dadurch **gekennzeichnet,** daß dem thermisch nicht rekristallisierendem Polyester weitere Zusatzstoffe, wie Strahlungsabsorptionsstoffe, Pigmente oder Farbstoffe zugegeben werden.

21. Verfahren zur Herstellung eines Datenträgers nach Anspruch 1, dadurch **gekennzeichnet,**
- daß in ein thermisch nicht rekristallisierendes Polyester ein Anti-Blockmittel eingemischt wird,
- daß eine Folie aus dieser Mischung hergestellt wird, wobei die Folie in der gewünschten Dicke des Datenträgers hergestellt wird,
- aus der Folie Bögen oder Einzelkarten hergestellt werden,
- die Bögen oder Einzelkarten bedruckt und im Falle der Bögen zu Einzelkarten weiterverarbeitet werden.

22. Verfahren nach Anspruch 20, dadurch **gekennzeichnet,** daß dem thermisch nicht rekristallisierendem Polyester vor der Herstellung der Folie weitere Zusatzstoffe, wie Strahlungsabsorptionsstoffe, Pigmente oder Farbstoffe zugegeben werden.

23. Verfahren zur Herstellung eines Datenträgers nach Anspruch 1, dadurch **gekennzeichnet,**
- daß in ein thermisch nicht rekristallisierendes Polyester ein Anti-Blockmittel eingemischt wird,
- aus dieser Mischung eine erste lichtdurchlässige Folie hergestellt wird, die erste Folie mit mindestens einer weiteren thermisch nicht rekristallisierenden Polyesterfolie, die ebenfalls ein Anti-Blockmittel enthält, laminiert wird.

24. Verfahren nach Anspruch 23, dadurch **gekennzeichnet,** daß wenigstens eine der Folien durch Folienziehen hergestellt wird.

25. Verfahren nach Anspruch 23, dadurch **gekennzeichnet,** daß wenigstens eine der Folien durch Extrudieren hergestellt wird.

26. Verfahren nach Anspruch 23, dadurch **gekennzeichnet,** daß die erste Folie durch Coextrusion zweier thermisch nicht rekristallisierender PET-Folien hergestellt wird, die anschließend miteinander verbunden werden.

27. Verfahren nach Anspruch 26, dadurch **gekennzeichnet,** daß lediglich eine der coextrudierten Folien ein Anti-Blockmittel enthält.

28. Verfahren nach einem der Ansprüche 19 bis 23, dadurch **gekennzeichnet,** daß das Anti-Blockmittel der jeweiligen Folienmasse in einer Menge von 0,1 bis 3 Gew.%, bevorzugt 0,5 bis 2 Gew.%, zugegeben wird.

29. Verfahren nach einem der Ansprüche 19 bis 24, dadurch **gekennzeichnet,** daß dem Folienmaterial zusätzlich ein strahlungsabsorbierender Stoff zugegeben wird.

30. Verfahren nach einem der Ansprüche 19 bis 25, dadurch **gekennzeichnet,** daß zwischen der ersten Folie und der weiteren Folienschicht ein opakes Kernmaterial laminiert wird.

31. Verfahren nach Anspruch 26, dadurch **gekennzeichnet,** daß das Kernmaterial aus Papier oder Kunststoff besteht.

32. Verfahren nach Anspruch 26, dadurch **gekennzeichnet,** daß das opake Kernmaterial ebenfalls aus einem chemisch modifizierten, thermisch nicht rekristallisierenden Polyester besteht.

## Claims

1. A single- or multilayer data carrier, such as an identity card, bank card or the like, which has at least one plastic layer, characterized in that the plastic layer consists of a thermally nonrecrystallizing polyester, in particular a nonrecrystallizing polyethylene terephthalate, and the layer contains an antiblocking agent at least in partial areas of its volume.

2. The data carrier of claim 1, characterized in that the thermally nonrecrystallizing polyester is a polyethylene terephthalate modified with glycol and cyclohexane dimethanol.

3. The data carrier of claim 1 or 2, characterized in that the data carrier has two thermally nonrecrystallizing polyester layers, at least one of the two layers being transparent at least in partial areas.

4. The data carrier of any of claims 1 to 3, characterized in that the antiblocking agent is present in a concentration of 0.1 to 3 wt%, preferably 0.5 to 2 wt%.

5. The data carrier of any of claims 1 to 4, characterized in that the partial area in which the antiblocking agent is located extends from the outer surface to at most the middle of the outer layer (5, 12).

6. The data carrier of any of claims 1 to 5, characterized in that the antiblocking agent is selected from the group of paraffins, polyethylene waxes, stearyl alcohols, montanic acids, calcium stearate, zinc stearate, calcium montanate, montanic acid ester wax or partly saponified montanic acid ester wax.

7. The data carrier of any of claims 1 to 6, characterized in that at least one of the chemically modified layers is transparent, translucent or partly opaque.

8. The data carrier of any of claims 1 to 7, characterized in that at least one of the layers is printed on its inside.

9. The data carrier of any of claims 1 to 8, characterized in that at least one further layer which is opaque is disposed between the two layers.

10. The data carrier of claim 9, characterized in that the further layer consists of paper or plastic and the layer is printed.

11. The data carrier of either of claims 9 to 10, characterized in that the thickness of the further layer is 200 to 650 microns and the thickness of the outer layer 50 to 300 microns.

12. The data carrier of any of claims 9 to 11, characterized in that all layers of the data carrier consist of a chemically modified, thermally nonrecrystallizing polyester.

13. The data carrier of any of claims 1 to 11, characterized in that at least one of the layers contains a radiation-absorbent additive.

14. The data carrier of claim 1 or 2, characterized in that the data carrier is constructed of only one layer of thermally nonrecrystallizing polyester.

15. The data carrier of any of claims 1 to 14, characterized in that the data carrier contains an antiblocking agent at least in a partial area of its volume.

16. The data carrier of claim 14 or 15, characterized in that a radiation-absorbent additive was admixed to the data carrier.

17. The data carrier of claim 16, characterized in that a fast and sensitively carbonizing plastic, in particular polycarbonate, is admixed to the data carrier.

18. The data carrier of any of the above claims, characterized in that one of the plastic layers contains an additive which is selected from the group of polyethylene naphthalates deriving from polyester.

19. A method for producing the single- or multilayer data carrier of claim 1, characterized in that an antiblocking agent is added to a thermally nonrecrystallizing polyester, this mixture melted and the resulting melt put in card form using the injection molding technique.

20. The method of claim 19, characterized in that further additives, such as radiation-absorbent substances, pigments or dyes, are added to the thermally nonrecrystallizing polyester.

21. A method for producing the data carrier of claim 1, characterized in that
- an antiblocking agent is mixed into a thermally nonrecrystallizing polyester, - a foil is produced from this mixture, the foil being produced in the desired thickness of the data carrier,
- sheets or single cards are produced from the foil,
- the sheets or single cards are printed and, in the case of the sheets, further processed into single cards.

22. The method of claim 20, characterized in that further additives, such as radiation-absorbent substances, pigments or dyes, are added to the thermally nonrecrystallizing polyester prior to production of the foil.

23. A method for producing the data carrier of claim 1, characterized in that
- an antiblocking agent is mixed into a thermally nonrecrystallizing polyester,
- a first transparent foil is produced from this mixture, the first foil being laminated with at least one further thermally nonrecrystallizing polyester foil which likewise contains an antiblocking agent.

24. The method of claim 23, characterized in that at least one of the foils is produced by drawing.

25. The method of claim 23, characterized in that at least one of the foils is produced by extrusion.

26. The method of claim 23, characterized in that the first foil is produced by coextruding two thermally nonrecrystallizing PET foils which are subsequently interconnected.

27. The method of claim 26, characterized in that only one of the coextruded foils contains an antiblocking agent.

28. The method of any of claims 19 to 23, characterized in that the antiblocking agent is added to the particular foil material in a quantity of 0.1 to 3 wt%, preferably 0.5 to 2 wt%.

29. The method of any of claims 19 to 24, characterized in that a radiation-absorbent substance is added to the foil material additionally.

30. The method of any of claims 19 to 25, characterized in that an opaque core material is laminated between the first foil and the further foil layer.

31. The method of claim 26, characterized in that the core material consists of paper or plastic.

32. The method of claim 26, characterized in that the opaque core material likewise consists of a chemically modified, thermally nonrecrystallizing polyester.

## Revendications

1. Un support de données mono ou multicouches, tel qu'une carte d'identité, une carte bancaire ou similaire, qui comporte au moins une couche de matière plastique, caractérisé en ce que la couche de matière plastique consiste en un polyester non recristallisant thermiquement, en particulier un polyéthylène téréphtalate non recristallisant et en ce que la couche contient un agent antiblocage au moins dans des régions partielles de son volume.

2. Le support de données selon la revendication 1, caraterérisé en ce que le polyester non recristallisant thermiquement est un polyéthylène téréphtalate modifié par le glycol et le cyclohéxane diméthanol.

3. Le support de données selon la revendication 1 ou 2, caractérisé en ce que le support de données comporte deux couches de polyester non thermiquement recristallisant, dont l'une au moins des deux couches est transparente au moins dans des régions partielles.

4. Le support de données selon l'une quelconque des revendications 1 à 3, caractérisé en ce que l'agent antiblocage est présent à une concentration de 0,1 à 3 % en poids, de préférence de 0,5 à 2 % en poids.

5. Le support de données selon l'une quelconque des revendications 1 à 4, caractérisé en ce que la zone partielle dans laquelle l'agent antiblocage est présent, s'étend de la surface externe jusqu'à au moins le milieu de la couche externe (5, 12).

6. Le support de données selon l'une quelconque des revendications 1 à 5, caractérisé en ce que l'agent antiblocage est choisi dans le groupe des paraffines, des cires de polyéthylène, des alcools stéaryl, des acides montanique, du stéarate de calcium, du stéarate de zinc, du montanate de calcium, de la cire d'ester, de l'acide montanique ou de la cire d'ester de l'acide montanique partiellement saponifié.

7. Le support de données selon l'une quelconque des revendications 1 à 6, caractérisé en ce qu'au moins une des couches chimiquement modifiées est transparente, translucide ou partiellement opaque.

8. Le support de données selon l'une quelconque des revendications 1 à 7, caractérisé en ce qu'au moins l'une des couches est imprimée sur son intérieur.

9. Le support de données selon l'une quelconque des revendications 1 à 8, caractérisé en ce qu'au moins une couche supplémentaire qui est opaque est disposée entre les deux couches.

10. Le support de données selon la revendications 9, caractérisé en ce que la couche supplémentaire consiste en papier ou en matière plastique et en ce que la couche est imprimée.

11. Le support de données selon l'une quelconque des revendications 9 ou 10, caractérisé en ce que l'épaisseur de la couche supplémentaire est de 200 à 650 microns et l'épaisseur de la couche externe de 50 à 300 microns.

12. Le support de données selon l'une quelconque des revendications 9 à 11, caractérisé en ce que toutes les couches du support de données se compose d'un polyester non recristallisant thermiquement sous une forme chimiquement modifiée.

13. Le support de données selon l'une quelconque des revendications 1 à 11, caractérise en ce qu'au moins l'une des couches contient un additif absorbant le rayonnement.

14. Le support de données selon la revendication 1 ou 2, caractérisé en ce que le support de données est constitué d'une seule couche de polyester non recristallisant thermiquement.

15. Le support de données selon l'une quelconque des revendications 1 à 14, caractérisé en ce que le support de données contient un agent antibloquant, au moins dans une zone partielle de son volume.

16. Le support de données selon l'une quelconque des revendications 14 ou 15, caractérisé en ce que l'additif absorbant le rayonnement est mélangé au support de données.

17. Le support de données selon la revendication 16, caractérisé en ce qu'une matière plastique se carbonisant rapidement et de manière sensitive, en particulier du polycarbonate, est mélangée au support de données.

18. Le support de données selon l'une quelconque des revendications précédentes, caractérisé en ce qu'une couche de matière plastique contient un additif qui est choisi dans le groupe des polyéthylène naphtalates dérivant du polyester.

19. Un procédé de fabrication d'un support de données mono ou multicouches selon la revendication 1, caractérisé en ce qu'on ajoute un agent antiblocage à un polyester non recristallisant thermiquement, on fond le mélange et on met le produit fondu résultant sous forme de carte en utilisant la technique du moulage par injection.

20. Le procédé selon la revendication 19, caractérisé en ce que l'on ajoute des additifs supplémentaires, tels que substances absorbant le rayonnement, des pigments ou colorants au polyester non recristallisant thermiquement.

21. Un procédé de fabrication de support de données selon la revendication 1, caractérisé en ce que :
- on mélange l'agent antiblocage dans un polyester non recristallisant thermiquement,
- on fabrique un feuil à partir de ce mélange, le feuil étant fabriqué, en l'épaisseur désirée pour le support de données,
- on fabrique des feuilles ou des cartes simples à partir de la feuille,
- on imprime les feuilles ou cartes simples et, dans le cas des feuilles, on les transforme ensuite en cartes simples.

22. Le procédé selon la revendication 20, caractérisé en que des additifs complémentaires tels que des substances absorbant le rayonnement, des pigments ou des colorants, sont ajoutés au polyester non recristallisant thermiquement avant la fabrication de la feuille.

23. Un procédé de fabrication du support de données selon la revendication 1, caractérisé en ce que :
- on mélange un agent antiblocage avec un polyester non recristallisant thermiquement,
- on fabrique un premier feuil transparent à partir de ce mélange, ce premier feuil étant stratifié avec au moins un autre feuil de polyester thermiquement non recristallisant qui contient de même un agent antiblocage.

24. Le procédé selon la revendication 23, caractérisé en ce qu'au moins l'un des feuils est obtenu par étirage.

25. Le procédé selon la revendication 23, caractérisé en ce qu'au moins l'un des feuils est fabriqué par extrusion.

26. Un procédé selon la revendication 23, caractérisé en ce que le premier feuil est obtenu par coextrusion de deux feuils de PET (polyester tereplitalate) non thermiquement recristallisant qui sont ensuite reliés entre eux.

27. Le procédé selon la revendication 26, caractérisé en ce qu'une seule des feuilles coextrudées contient un agent antiblocage.

28. Un procédé selon l'une quelconque des revendications 19 à 23, caractérisé en ce que l'agent antiblocage est ajouté au matériau du feuil particulaire à raison de 0,1 à 3 % en poids, préférablement de 0,5 à 2 % en poids.

29. Le procédé selon l'une quelconque des revendications 19 à 24, caractérisé en ce qu'une substance absorbant le rayonnement est ajoutée en plus au matériau du feuil.

30. Le procédé selon l'une quelconque des revendications 19 à 25, cararactérisé en ce qu'on stratifie un matériau de coeur opaque entre le premier feuil et l'autre couche de feuil.

31. Le procédé selon la revendication 26, caractérisé en ce que le matériau du coeur se compose de papier ou de matière plastique.

32. Le procédé selon la revendication 26, caractérisé en ce que le matériau de coeur opaque se compose d'un polyester non thermiquement recristallisant chimiquement modifié.
